Europäisches Patentamt

European Patent Office

Office européen des brevets

(19)

(11) Veröffentlichungsnummer: **0 103 226**
**A2**

# (12) EUROPÄISCHE PATENTANMELDUNG

(21) Anmeldenummer: **83108470.2**

(22) Anmeldetag: **27.08.83**

(51) Int. Cl.³: **F 02 D 33/00**

(30) Priorität: **13.09.82 DE 3233932**

(43) Veröffentlichungstag der Anmeldung: **21.03.84**
**Patentblatt 84/12**

(84) Benannte Vertragsstaaten: **FR GB NL**

(71) Anmelder: **Karl Hopt GmbH,**
**D-7464 Schömberg-2 Schörzingen (DE)**

(72) Erfinder: **Dolderer, Erich A., Goethestrasse 14,**
**D-7406 Mössingen 1 (DE)**

(74) Vertreter: **Patentanwälte Kohler - Schwindling - Späth,**
**Hohentwielstrasse 41, D-7000 Stuttgart 1 (DE)**

(54) **Einrichtung zum Reduzieren der Treibstoffzufuhr eines Antriebsmotors eines Kraftfahrzeuges.**

(57)    In einem Kraftfahrzeug ist eine Einrichtung vorgesehen, die die Treibstoffzufuhr zum Antriebsmotor im Schubbetrieb reduziert, bzw. abschneidet. Dabei sind eine Zündanlage (19) und eine Schubabschneidung (18) auf einer gemeinsamen oder benachbarten Platine einer elektronischen Steuereinheit angeordnet und die Steuereinheit enthält Schaltmittel zum Beeinflussen der Schubeinschneidung (18) abhängig von der Motortemperatur. Die Schaltmittel sind dabei als temperaturempfindliches Element ausgebildet, das die Erwärmung eines sich bei Inbetriebnahme des Antriebsmotors (10) erwärmenden Bauteils der Zündanlage (19) erfaßt.

0103226

Anmelderin:
Firma
Karl Hopt GmbH
Elektrotechnische Fabrik
7464 Schömberg - 2

Vertreter:
Kohler-Schwindling-Späth
Patentanwälte
Hohentwielstraße 41
7000 Stuttgart 1

Stuttgart, 10. August 1983
P 4243 EP W/Ba

# Einrichtung zum Reduzieren der Treibstoffzufuhr eines Antriebsmotors eines Kraftffahrzeuges

Die Erfindung geht aus von einer Einrichtung zum Reduzieren
der Treibstoffzufuhr eines Anriebsmotors eines Kraftfahrzeuges im Schubbetrieb, bei der eine Zündanlage und eine Schubabschneidung auf einer gemeinsamen oder benachbarten Platine
einer elektronischen Steuereinheit angeordnet sind und die
Steuereinheit Schaltmittel zum Beeinflussen der Schubabschneidung abhängig von der Motortemperatur aufweist.

Es ist bekannt, Kraftfahrzeuge mit einer sogenannten Schubabschneidung auszustatten, einer Einrichtung, die die Treibstoffzufuhr zum Antriebsmotor im Schubbetrieb unterbricht, wobei üblicherweise der Schubbetrieb aus dem Lösen des Fahrpedals erkannt wird. Um dabei ein Ausgehen des Antriebsmotors zu verhindern, wird üblicherweise dabei die Motordrehzahl überwacht und die Schubabschneidung nur dann aktiviert, wenn die Motordrehzahl noch oberhalb einer vorgegebenen Leerlaufdrehzahl liegt. Eine derartige Einrichtung ist beispielsweise aus der DE-OS 17 51 049 bekannt.

Es ist weiter bekannt, daß derartige Einrichtungen zur Schubabschneidung dann zu Problemen führen können, wenn der Antriebsmotor kurz nach der Inbetriebnahme noch nicht auf Betriebstemperatur ist. Bei einem kalten Antriebsmotor wird nämlich zweckmäßigerweise die Leerlaufdrehzahl höher eingestellt, da bei den im Warmlauf des Motors zweckmäßigen Leerlaufsdrehzahlen ein Ausgehen des Motors droht. Wird ein Fahrzeug mit Schubabschneidung daher mit kaltem Antriebsmotor betrieben, droht während der ersten Schubphase, in der die Schubabschneidung wirksam wird, ein Ausgehen des Motors, da die von der Schubabschneidung vorgegebene Mindestdrehzahl bei kaltem Antriebsmotor nicht ausreicht. Es ist daher bekannt, die Leerlaufdrehzahl, bei deren Erreichen die Schubabschneidung wieder abgeschaltet wird, in Abhängigkeit von der Motortemperatur einzustellen. Dies ist beispielsweise in der DE-OS 30 22 999 beschrieben.

Will man jedoch die Motortemperatur zum Steuern der Schubabschneidung mit heranziehen, ist es bei den bekannten
Einrichtungen erforderlich, einen separaten Motortemperatur-Sensor vorzusehen. Dieser Temperatursensor stellt jedoch
eine Komplizierung der Anlage dar, da separate Leitungen vom
Motor zum elektronischen Steuergerät geführt werden müssen.
Außerdem bedeutet das Vorsehen eines Motortemperatur-Sensors
erhebliche zusätzliche Kosten, da derartige Motortemperatur-Sensoren aufgrund der rauhen Betriebsverhältnisse in
einem Kraftfahrzeug teuer in der Herstellung sind und zusätzliche Aufnahmevorrichtungen im Antriebsmotor erforderlich machen.

Der Erfindung liegt demgegenüber die Aufgabe zugrunde, eine
Einrichtung der eingangs genannten Art zu schaffen, bei der
die Berücksichtigung der Motortemperatur auf besonders
einfache Weise möglich ist.

Diese Aufgabe wird erfindungsmäßig dadurch gelöst, daß die
Schaltmittel aus einem temperaturempfindlichen Element
bestehen, saß die Erwärmung eines sich bei Inbetriebnahme
des Antriebsmotors erwärmenden Bauteiles der Zündanlage
erfaßt.

Die Erfindung löst damit die zugrundeliegende Aufgabe mit
verblüffend einfachen Mitteln, indem die Temperatur eines
auf der gleichen Platine angeordneten Bauelementes erfaßt
wird. Damit entfallen Verbindungsleitungen von der elektronischen Steuereinheit zum Antriebsmotor, und zur Erfassung
der Temperatur des Bauteiles auf der Platine sind nur relativ einfache und kostengünstige Elemente, beispielsweise NTC- oder PTC-Widerstände oder Bimetallschalter erforderlich. Da die elektronischen Steuergeräte in Kraftfahrzeugen besonders gut gegen Umwelteinflüsse geschützt sind, entfällt auch die Notwendigkeit, einen Temperatursensor mit besonders hohen Sicherheitsspezifikationen gegenüber Umweltbedingungen einzusetzen.

Weitere Vorteile ergeben sich aus den Maßnahmen der Unteransprüche.

So wird in bevorzugter Ausgestaltung der Erfindung die Erwärmung eines Widerstandes der Zündanlage ausgewertet, vorzugsweise eines Basiswiderstandes eines Schalttransistors in der Zündanlage. Bei einer bestimmten Zündanlage wird beispielsweise hierzu ein Widerstand von $15\,\Omega$ verwendet, den ein Strom von 1,5 A durchfließt. Wie man leicht sieht, entsteht hierdurch eine Verlustwärme, die leicht zum Betätigen eines temperaturempfindlichen Elementes oder Schalters ausreicht.

Eine schaltungstechnisch besonders einfache Ausgestaltung einer erfindungsgemäßen Einrichtung wird dadurch möglich, daß die Signale des Leerlaufschalters des Fahrpedales und des temperaturempfindlichen Elementes aus der Zündanlage auf Eingänge eines Komparators geführt werden, wobei das Signal des temperaturempfindlichen Elementes bei Unterschreiten der erforderlichen Betriebstemperatur die Weitergabe des die Schubabschneidung aktivierenden Signales des Leerlaufschalters verhindert.

Entsprechend einer weiteren Ausbildung der Erfindung ist die Einrichtung so ausgebildet, daß bei Unterschreiten der Betriebstemperatur nicht eine schlagartige Unterdrückung der Schubabschneidung eintritt, sondern vielmehr eine graduelle Reduzierung, deren Wirkung einsetzt je nach dem, ob die tatsächlich vorliegende Temperatur noch weit unterhalb der Betriebstemperatur liegt, oder sich dieser bereits angenähert hat. Hierzu ist besonders eine getaktete Ansteuerung eines Leerlaufventiles im Eingang des Antriebsmotors geeignet.

Eine besonders gute Wirkung wird auch dadurch erzielt, daß in Abhängigkeit von der erfaßten Temperatur die Leerlaufdrehzahl, bei deren Unterschreitung die Schubabschneidung außer Betrieb gesetzt wird, für niedrige Temperaturen angehoben wird.

Weitere Vorteile sind der Beschreibung und der Zeichnung zu entnehmen.

Die Erfindung wird im folgenden an Hand der Zeichnung beschrieben. Es zeigen

Fig. 1    eine Prinzipdarstellung einer Ausführungsform einer erfindungsgemäßen Einrichtung;

Fig. 2    eine Draufsicht auf eine erfindungsgemäß verwendete Platine der elektronischen Steuereinheit;

Fig. 3    einen Ausschnitt aus einem Schaltbild eines Ausführungsbeispieles einer erfindungsgemäßen Einrichtung;

Fig. 4    ein Blockschaltbild einer weiteren Ausführungsform einer erfindungsgemäßen Einrichtung.

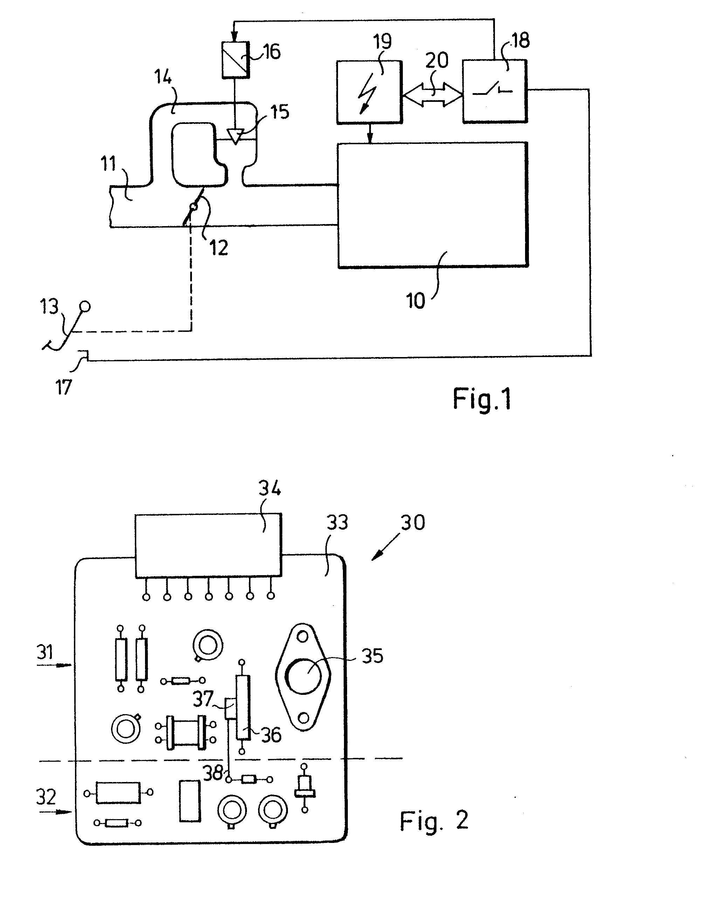

In Fig. 1 ist 10 ein Antriebsmotor, im dargestellten Beispiel ein Otto-Motor eines Kraftffahrzeuges. Zum Antriebsmotor 10 führt ein Saugrohr 11, in dem sich eine Drosselklappe 12 befindet, die von einem Fahrpedal 13 betätigbar ist. Die Drosselklappe 12 ist mit einem Bypass überbrückbar, in dem ein Leerlaufventil 15 angeordnet ist, das über eine Erregerspule 16 betätigt werden kann. Die Erregerspule 16 sowie ein dem Fahrpedal 13 zugeordneter Leerlaufschalter 17 sind mit einer Schubabschneidung 18 verbunden. Die Schubabschneidung 18 steht mit einer Zündanlage 19 des Antriebsmotors 10 über eine Datenleitung 20 in Verbindung.

Die bekannten Einrichtungen dieser Art arbeiten in der Weise, daß bei gelöstem Fahrpedal 13 und damit geschlossener Drossenlklappe 12 zusätzlich noch das Leerlaufventil 15 über die Erregerwicklung dann geschlossen wird, wenn die Drehzahl des Antriebsmotors 10 oberhalb einer vorgegebenen Leerlaufdrehzahl liegt. Um diesen Betriebsfall zu erkennen, ist der Leerlaufschalter 17 vorgesehen, der ein logisches Signal bei gelöstem Fahrpedal 13 an die Schubabschneidung 18 abgibt. Die Schubabschneiung 18 bildet aus den Zündimpulsen der Zündanlage 19, die ihr über die Datenleitung 20 übermittelt werden, ein Drehzahlsignal und prüft, ob die vorliegende Drehzahl oberhalb der vorgegebenen Leerlaufdrehzahl des
Antriebsmotors 10 liegt. Ist dies der Fall, wird die Erregerwicklung 16 angesteuert und das Leerlaufventil 15 geschlossen, so daß die Treibstoffzufuhr zum Antriebsmotor 10
vollkommen unterbrochen wrd. Erst wenn das Fahrpedal 13
wieder betätigt wird und der Leerlaufschalter 17 damit
umschaltet oder wenn die Antriebsdrehzahl die vorgegebene
Leerlaufdrehzahl unterschreitet, wird das Leerlaufventil 15
wieder geöffnet, so daß der Antriebsmotor 10 wenigstens auf
der Leerlaufdrehzahl laufen kann .

Um nun bei kaltem Antriebsmotor kurz nach Inbetriebnahme des
Kraftfahrzeuges zu verhindern, daß bei der auf einen betriebswarmen Antriebsmotor 10 abgestellten Leerlaufdrehzahl
ein Ausgehen des Antriebsmotors eintritt, wird erfindungsgemäß in der weiter unten noch im Einzelnen zu schildernder
Weise aus der Zündanlage 19 ein Signal abgeleitet, das der
Motortemperatur entspricht. Erkennt die Schubabschneidung
18, daß die Motortemperatur noch unterhalb der Betriebstemperatur liegt, wird entweder die Schubabschneidung generell unterdrückt oder in einer Weise begrenzt, daß ein
Ausgehen des Antriebsmotors 10 nicht möglich ist.

Fig. 2 zeigt in gegenständlicher Darstellung eine elektronische Steuereinheit 30 bei der ein Abschnitt 31 für die
Zündanlage und in Abschnitt 32 für die Schubabschneidung auf
einer gemeinsamen Platine 33 angeordnet sind. Die Steuersignale für die elektronische Steuereinheit 30 und die Ausgangssignale für die Zündanlage 19 und die Erregerwicklung
16 werden dabei über einen gemeinsamen Stecker 34 geführt, der an der Platine 33 befestigt ist. Im Abschnitt 31 der Zündanlage erkennt man einen Schalttransistor 35, der beispielsweise den Primärstrom der Zündspule der Zündanlage steuert. In der Basisleitung des Schalttransistors 35 ist dabei ein Widerstand 36 angeordnet, auf dem sich ein temperaturempfindliches Element 37 befindet, das über eine Verbindung 38 an die Schaltung des Abschnittes 32 der Schubabschneidung angeschlossen ist.

Bei abgestelltem Fahrzeug ist die gesamte elektronische Steuereinheit 30 stromlos und die darauf befindlichen Bauelemente sind kalt. Wird nun das Kraftfahrzeug in Betrieb genommen, fließt sofort ein Strom durch die Schaltelemente der Zündanlage im Abschnitt 31 der Platine 33. Der dabei den Basiswiderstand 36 durchfließende Strom reicht aus, um diesen Basiswiderstand 36 zu erwärmen. Dieser Erwärmungsvorgang geht in etwa parallel mit dem Erwärmungsvorgang des Antriebsmotors, da die Zündanlage solange in Betrieb ist wie der Antriebsmotor selbst. Im allgemeinen dauert dieser Erwärmungsvorgang etwa 2 Minuten. Die Erwärmung des Basiswiderstandes 36 wird über das temperaturempfindliche Element 37 erkannt und an den Abschnitt 32 der Platine 33 der die Schubabschneidung enthält, gemeldet. Über die äußerst kurze Verbindung 38 zwischen den Abschnitten 31 und 32 erhält damit die Schubabschneidung ein Signal, das in sehr guter Näherung die Erwärmung des Antriebsmotors 10 wiedergibt.

Es versteht sich dabei, daß die Erfindung selbstverständlich nicht auf das vorstehend geschilderte Ausführungsbeispiel beschränkt ist, sondern daß vielmehr auch die Erwärmung eines anderen geeigneten Bauteiles der Zündanlage ausgewertet werden kann. Auch kann die erfindungsgemäße Einrichtung mit Vorteil bei solchen Einrichtungen verwendet werden, bei der die Zündanlage 19 und die Schubabschneidung 18 nicht auf derselben Platine 33 sondern auf benachbarten Platinen untergebracht sind. In jedem Falle wird auch bei einer derartigen Anordnung die Verbindung zwischen den beiden Platinen wesentlich kürzer sein, als die Verbindung zu einem externen Motortemperatur-Sensor am Antriebsmotor.

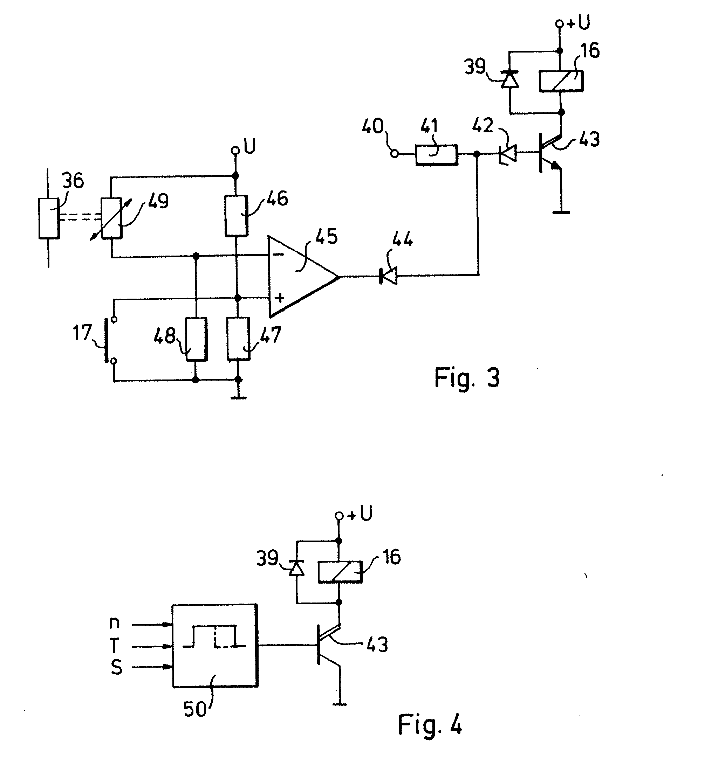

Fig. 3 zeigt ein Schaltbild, wie es mit Vorteil bei einem Ausführungsbeispiel der erfindungsgemäßen Einrichtung verwendet werden kann. Über eine Klemme 40, einen Widerstand 41 sowie eine Zenerdiode 42 wird dabei der Basis eines Doppelemitter-Schalttransistors 43 ein drehzahlabhängiges Signal sowie ein Steuersignal über eine Diode 44 zugeführt. Der Schalttransistor 43 schaltet die Erregerwicklung 16 des Leerlaufventils 15 an eine Betriebsspanung +U, wobei die Erregerwicklung 16 von einer Freilaufdiode 39 überbrückt ist.

Der Signalzweig von der Diode 44 führt zum Ausgang eines Komparators 45, von dessen invertierendem Eingang ein PTC- oder NTC-Widerstand 49 zu einer Betriebsspannung U führt. Zwischen Betriebsspannung U und Masse liegt ferner ein Spannungsteiler 46, 47, dessen Abgriff einmal zum nichtinvertierenden Eingang des Komparators und zum anderen zum Leerlaufschalter 17 und von dort nach Masse führt. Der invertierende Eingang des Komparators 45 ist ebenfalls über einen Widerstand 48 an Masse angeschlossen. Schließlich steht der Widerstand 49 in der oben beschriebenen Weise noch
mit dem Basiswiderstand 36 des Schalttransistors 35 der
Zündanlage 19 in thermischer Verbindung.

Wie man leicht aus Fig. 3 sieht, schaltet der Komparator 45
dann um, wenn der Schalter 17 betätigt wird, sofern das
Spannungsteilerverhältnis der Widerstände 48, 49 einen
bestimmten Wert hat. Da dieses Spannungsteilerverhältnis
jedoch von der Temperatur des Bauteiles abhängt, kann man
durch entsprechende Wahl der Widerstandswerte und selbstverständlich auch der Polaritäten des Komparators 45 erreichen,
daß eine Weitergabe des Schaltsignales vom Leerlaufschalter
17 über den Komparator 45 nur dann erfolgt, wenn die Temperatur des Bauteiles 36 oberhalb eines bestimmten Wertes
liegt. Hierzu muß der Widerstand 49 entweder mit positivem
oder negativem Temperaturkoeffizienten ausgestattet sein und
die Widerstandsvariation in dem hier vorliegenden Temperaturbereich bis zur Betriebstemperatur muß so bemessen sein,
daß ein Umschalten des Komparators 45 bei Betätigen des
Schalters 17 unterhalb der genanten Temperatur verhindert
wird.

Fig. 4 zeigt schließlich noch ein weiteres Ausführungsbeispiel einer erfindungsgemäßen Einrichtung, bei der die
Erregerwicklung 16 des Leerlaufventils 15 nicht statisch
ein- oder ausgeschaltet sondern vielmehr getaktet betätigt
wird. Hierzu ist ein Impulsgenerator 50 mit variabler Impulsbreite, d.h. einstellbarem Impuls-Pausenverhältnis
vorgesehen, der über ein der Motordrehzahl n entsprechendes
Signal, ein der zu überwachenden Motortemperatur T enspre-

0103226

chendes Signal und ein dem Schalter S des Leerlaufschalters 17 entsprechendes Signal gesteuert wird. Damit ist es möglich, in dem genannten Betriebsfall eine Leerlaufdrehzahl einzustellen, bei der auch bei kaltem Antriebsmotor kein Ausgehen des Motors droht.

Schließlich kann beim Ausführungsbeispiel gemäß Fig. 3 oder Fig. 4 auch die Leerlaufdrehzahl in Abhängigkeit von der erfindungsgemäß erfaßten Temperatur derart eingestellt werden, daß ein Ausgehen des Antriebsmotors 10 sicher vermieden wird.

0103226

Patentansprüche

1. Einrichtung zum Reduzieren der Treibstoffzufuhr eines Antriebsmotors (10) eines Kraftfahrzeuges im Schubbetrieb, bei der eine Zündanlage (19) und eine Schubabschneidung (18) auf einer gemeinsamen oder benachbarten Platine (33) einer elektronischen Steuereinheit (30) angeordnet sind und die Steuereinheit Schaltmittel zum Beeinflussen der Schubabschneidung (18) abhängig von der Motortemperatur T aufweist, dadurch gekennzeichnet, daß die Schaltmittel aus einem temperaturempfindlichen Element (37) bestehen, das die Erwärmung eines sich bei Inbetriebnahme des Antriebsmotors (10) ewärmenden Bauteiles der Zündanlage (19) erfaßt.

2. Einrichtung nach Anspruch 1, dadurch gekennzeichnet, daß das Element (37) ein NTC- oder PTC-Widerstand (49) ist.

3. Einrichtung nach Anspruch 1, dadurch gekennzeichnet, daß das Element (37) ein Bimetall-Schalter ist.

4. Einrichtung nach einem der vorhergehenden Ansprüche, dadurch gekennzeichnet, daß das Bauteil ein Widerstand ist.

5.  Einrichtung nach Anspruch 4, dadurch gekennzeichnet,
    daß der Widerstand ein Basiswiderstand(36)eines
    Schalttransistors (35) der Zündanlage (19) ist.

6.  Einrichtung nach einem der vorhergehenden Ansprüche,
    bei der die Schubabschneidung (18) oberhalb einer
    vorgegebenen Drehzahl des Antriebsmotors (10) dann
    aktiviert wird, wenn ein Leerlaufschalter (17) eine
    Nullstellung eines Fahrpedales (13) anzeigt, dadurch
    gekennzeichnet, daß der Leerlaufschalter (17) an dem
    einen und das Element (37, 49) an dem anderen Eingang
    eines Komparators (45) angeschlossen ist, derart, daß
    das vom Leerlaufschaler (17) rührende Signal S unterhalb einer vorbestimmten Temperatur T des Bauteils
    unterdrückt wird.

7.  Einrichtung nach einem der Anprüche 1 bis 5, bei der
    die Schubabschneidung (18) oberhalb einer vorgegebenen
    Drehzahl n des Antriebsmotors (10) dann aktiviert
    wird, wenn ein Leerlaufschalter (17) eine Nullstellung
    eines Fahrpedales (13) anzeigt, dadurch gekennzeichnet, daß die Signale n, T, S der Motordrehzahl, der
    Temperatur des Bauteiles und der Nullstellung des
    Fahrpedales einem Impulsgenerator (50) zum Einstellen
    des Impuls/Pausenverhältnisses zugeführt werden, wobei
    die Impulse ein Leerlaufventil (15) des Antriebsmotors
    (10) getaktet betätigen.

8.  Einrichtung nach einem der Ansprüche 7 oder 8, dadurch
    gekennzeichnet, daß bei niedrigen Temperaturen T die
    vorgegebene Drehzahl des Antriebsmotors (10) erhöht
    wird.

Fig.1

Fig. 2

Fig. 3

Fig. 4